# EUROPÄISCHE PATENTSCHRIFT

(11) **EP 3 062 958 B1**
(45) Veröffentlichungstag und Bekanntmachung des Hinweises auf die Patenterteilung: **15.03.2017**
(21) Anmeldenummer: 14784185.2
(22) Anmeldetag: 26.09.2014
(51) Int. Cl.: B23Q 3/06, F16B 31/02

(54) **KRAFTSPANNMUTTER**
POWER CLAMPING NUT
ÉCROU DE SERRAGE DE PUISSANCE

(30) Priorität: 30.10.2013 DE 102013018241
(43) Veröffentlichungstag der Anmeldung: 07.09.2016
(73) Patentinhaber: Ludwig Ehrhardt GmbH, 35321 Laubach (DE)
(72) Erfinder: KOLB, Nils, 57299 Burbach (DE); WILLINGSHOFER, Thomas, 57334 Bad Laasphe (DE)
(74) Vertreter: v. Bezold & Partner Patentanwälte - PartG mbB
(86) Internationale Anmeldenummer: PCT/EP2014/002629
(87) Internationale Veröffentlichungsnummer: WO 2015/062688

(56) Entgegenhaltungen:
- DE-A1- 2 950 254
- US-A- 3 789 726
- US-A1- 2002 054 809

## Beschreibung

Die Erfindung betrifft eine Kraftspannmutter zum axialen Spannen eines Spannbolzens mit einer einstellbaren Spannkraft.

Aus dem Stand der Technik (z.B. Produktblatt "Mechanische Spannelemente" der Enemac GmbH aus 2010) sind solche Kraftspannmuttern bekannt, die in der Spanntechnik eingesetzt werden, um einen Spannbolzen axial zu spannen. Hierzu wird die Kraftspannmutter manuell auf ein Außengewinde des zu spannenden Spannbolzens aufgeschraubt, bis die Kraftspannmutter mit ihrer stirnseitigen Anlagefläche an einer entsprechenden Gegenlagerfläche aufliegt. Anschließend wird eine Stellschraube in der Kraftspannmutter mit einem Drehmomentschlüssel mit einem vorgegebenen Anzugsmoment gespannt, wobei das Anzugsmoment der Stellschraube die auf den Spannbolzen wirkende Spannkraft bestimmt.

Nachteilig an dieser bekannten Kraftspannmutter ist die Tatsache, dass die auf den Spannbolzen wirkende Spannkraft nur aus dem Anzugsmoment abgeleitet werden kann, das auf die Stellschraube aufgebracht wird. Zum genauen Spannen des Spannbolzens mit einer vorgegebenen Spannkraft ist deshalb bei den bekannten Kraftspannmuttern stets ein Drehmomentschlüssel erforderlich.

Ferner ist zum Stand der Technik hinzuweisen auf
US 2002/0054809 A1, DE 29 50 254 A1 und US 3 789 726 A. Diese Druckschriften offenbaren jedoch andere Typen von Kraftspannmuttern.

Der Erfindung liegt deshalb die Aufgabe zugrunde, eine entsprechend verbesserte Kraftspannmutter zu schaffen.

Diese Aufgabe wird durch eine erfindungsgemäße Kraftspannmutter gemäß dem Hauptanspruch gelöst.

Die erfindungsgemäße Kraftspannmutter weist zunächst in Übereinstimmung mit dem Stand der Technik eine Stelleinrichtung (z.B. Stellschraube mit entsprechendem Getriebe) auf, um die auf den Spannbolzen wirkende Spannkraft einstellen zu können.

Darüber hinaus weist die erfindungsgemäße Kraftspannmutter jedoch im Gegensatz zum Stand der Technik eine Anzeigeeinrichtung auf, um die auf den Spannbolzen wirkende Spannkraft anzuzeigen. Dies ist vorteilhaft, weil dann zum Spannen des Spannbolzens mit einer vorgegebenen Spannkraft kein Drehmomentschlüssel mehr erforderlich ist, da die Spannkraft unmittelbar von der Anzeigeeinrichtung der Kraftspannmutter angezeigt wird.

Gemäß der Erfindung weist die Kraftspannmutter einen Gehäusetopf mit einer stirnseitigen Anlagefläche auf, wobei die Anlagefläche des Gehäusetopfs beim Spannen an einer entsprechenden Gegenlagerfläche anliegt. Darüber hinaus weist der Gehäusetopf eine stirnseitige Bohrung auf, durch die der Spannbolzen mit seinem freien Ende in den Gehäusetopf eingeführt werden kann.

In dem Gehäusetopf ist ein Gewindeteil vorgesehen, das auf den Spannbolzen aufgeschraubt werden kann, wobei das Gewindeteil in dem Gehäusetopf drehbar und axial beweglich ist. Vorzugsweise verfügt das Gewindeteil der Kraftspannmutter über ein Innengewinde, das auf ein entsprechendes Außengewinde des Spannbolzens aufgeschraubt werden kann.

Darüber hinaus weist die Kraftspannmutter eine Feder (z.B. Tellerfeder) auf, die das Gewindeteil gegenüber dem Gehäusetopf axial vorspannt, so dass die Axialstellung des Gewindeteils die auf den Spannbolzen wirkende Spannkraft bestimmt.

Bei einem Spannvorgang wird das Gewindeteil also in dem Gehäusetopf so lange gedreht, bis die Axialstellung des Gewindeteils in dem Gehäusetopf die Feder so weit spannt, dass die Feder die gewünschte Spannkraft auf den Spannbolzen ausübt.

Die Anzeigeeinrichtung zur Anzeige der auf den Spannbolzen wirkenden Spannkraft weist vorzugsweise ein von außen sichtbares Gehäuseaußenteil auf, wobei das Gehäuseaußenteil relativ zu dem Gehäusetopf axial verschiebbar ist. Das von außen sichtbare Gehäuseaußenteil ist hierbei mit dem Gewindeteil verbunden, so dass die Axialstellung des Gehäuseaußenteils die Axialstellung des innen liegenden Gewindeteils und damit die auf den Spannbolzen wirkende Spannkraft wiedergibt.

Ferner weist die Anzeigeeinrichtung vorzugsweise eine Skale auf, die an der Mantelfläche des Gehäusetopfs angebracht ist und ein Ablesen der Axialstellung des Gehäuseaußenteils ermöglicht. Bei einem Spannvorgang schieben sich nämlich der Gehäusetopf und das Gehäuseaußenteil in axialer Richtung zusammen, wobei die Axialstellung des Gehäuseaußenteils relativ zu dem Gehäusetopf die auf den Spannbolzen wirkende Spannkraft wiedergibt. Im einfachsten Fall besteht die Skale lediglich aus einer einzigen Markierung, die das Erreichen der vorgegebenen Nennspannkraft anzeigt. Die Skale kann jedoch auch aus mehreren Markierungen (z.B. Teilstrichen) bestehen, so dass nicht nur das Erreichen der Nennspannkraft angezeigt werden kann, sondern auch der aktuelle quantitative Wert der Spannkraft abgelesen werden kann.

Es wurde bereits vorstehend kurz erwähnt, dass die erfindungsgemäße Kraftspannmutter eine Stelleinrichtung aufweist, die es ermöglicht, die auf den Spannbolzen wirkende Spannkraft einzustellen. Vorzugsweise umfasst diese Stelleinrichtung eine von außen zugängliche drehbare Stellschraube sowie ein Übersetzungsgetriebe zur Übertragung einer Drehbewegung der Stellschraube auf eine Drehbewegung des Gewindeteils. Eine Drehung der Stellschraube führt also zu einer entsprechenden Drehung des Gewindeteils und damit zu einem Aufschrauben des Gewindeteils auf den Spannbolzen, wodurch sich wiederum die Feder spannt und dadurch eine entsprechende Spannkraft auf den Spannbolzen ausübt.

In dem bevorzugten Ausführungsbeispiel der Erfindung weist das drehbare Gewindeteil ein Hohlrad mit einer innen liegenden Längsverzahnung auf, in die eine entsprechende Längsverzahnung der exzentrisch angeordneten Stellschraube eingreift. Die Stellschraube dreht also über ihre Längsverzahnung das Hohlrad und damit auch das drehbare Gewindeteil, was zu einem entsprechenden Spannen der Feder führt. Darüber hinaus ermöglicht diese Anordnung mit einem Hohlrad und einer exzentrisch angeordneten Stellschraube auch ein großes Übersetzungsverhältnis, so dass sich mit einem relativ geringen Anzugsmoment der Stellschraube große Spannkräfte realisieren lassen.

In dem bevorzugten Ausführungsbeispiel der Erfindung weist das Gewindeteil in dem Gehäusetopf einen bestimmten axialen Maximalhub auf, d.h. das Gewindeteil ist innerhalb des Gehäusetopfs in axialer Richtung innerhalb des Maximalhubs verschiebbar. Die Längsverzahnung der Stellschraube und die Längsverzahnung des Hohlrades weisen hierbei einen Verzahnungseingriff mit einer bestimmten Axiallänge auf, wobei die Axiallänge des Verzahnungseingriffs so groß ist, dass die Längsverzahnungen von Stellschraube und Hohlrad innerhalb des gesamten Axialhubs des Gewindeteils im Eingriff bleiben.

Ferner ist zu erwähnen, dass der Gehäusetopf in seiner Mantelfläche vorzugsweise einen Durchbruch aufweist, wobei sich durch den Durchbruch hindurch in radialer Richtung ein Verbindungselement (z.B. Bolzen) erstreckt, welches das Gehäuseaußenteil mit dem Gewindeteil verbindet, so dass die Axialstellung des Gehäuseaußenteils unmittelbar die Axialstellung des Gewindeteils und damit auch die Federkraft wiedergibt. Der Durchbruch in der Mantelfläche des Gehäusetopfs weist hierbei eine axiale Erstreckung auf, die einen entsprechenden Axialhub des Gehäuseaußenteils ermöglicht.

In dem bevorzugten Ausführungsbeispiel der Erfindung weist das Gewindeteil in seiner äußeren Mantelfläche eine Ringnut auf, die über den gesamten Umfang des Gewindeteils umläuft. Der Durchbruch in der Mantelfläche des Gehäusetopfs ist dagegen vorzugsweise ein axial verlaufender Längsschnitt. Das Verbindungselement (z.B. Bolzen) zwischen dem Gehäuseaußenteil und dem Gewindeteil ist hierbei vorzugsweise an der Innenseite des Gehäuseteils fest angebracht und ragt durch den Längsschlitz in der Mantelfläche des Gehäusetopfs hindurch in die Ringnut in dem Gewindeteil hinein. Zum einen wird dadurch eine Drehbewegung des Gehäuseaußenteils relativ zu dem Gehäusetopf verhindert, da der Längsschlitz eine Drehbewegung des Verbindungselements und damit auch des Gehäuseaußenteils verhindert. Zum anderen ermöglicht diese Konstruktion eine Axialbewegung des Gehäuseaußenteils relativ zu dem Gehäusetopf, da das Verbindungselement in dem Längsschlitz verschieblich ist. Darüber hinaus ermöglicht diese Konstruktion auch eine Drehbewegung des Gewindeteils relativ zu dem Gehäuseaußenteil, da das Verbindungselement in die Ringnut in dem Gewindeteil hinein ragt und dadurch eine Drehbewegung des Gewindeteils nicht behindert.

Ferner wird das Verbindungselement zwischen dem Gehäuseaußenteil und dem Gewindeteil hierbei vorzugsweise durch mindestens einen Bolzen gebildet, der von außen in eine Bohrung in der Mantelfläche des Gehäuseaußenteils bündig eingeschlagen ist und radial nach innen durch den Längsschlitz hindurch in die Ringnut in den Gewindeteil hineinragt.

Die vorstehend bereits erwähnte Stellschraube ist vorzugsweise in einem Gehäuseinnenteil drehbar gelagert, wobei das Gehäuseinnenteil in den Gehäusetopf eingesetzt ist. An ihrem freien Ende weist die Stellschraube vorzugsweise einen Sicherungsring auf, um die Stellschraube axial in dem Gehäuseinnenteil zu sichern.

Weiterhin ist zu erwähnen, dass die Verbindung zwischen dem Gehäuseinnenteil und dem Gehäusetopf vorzugsweise durch mindestens einen Bolzen erfolgt, der von außen in eine Bohrung in der Wandung des Gehäusetopfs bündig eingeschlagen ist und radial nach innen in das Gehäuseinnenteil hineinragt.

Es wurde bereits vorstehend erwähnt, dass die eigentliche Spannkraft durch eine Feder aufgebracht wird, die den stirnseitig auf der Gegenlagerfläche anliegenden Gehäusetopf relativ zu dem Gewindeteil zusammen mit dem darin eingeschraubten Spannbolzen vorspannt. Diese Feder weist vorzugsweise mindestens eine Tellerfeder auf.

Darüber hinaus ist zu erwähnen, dass das drehbare Gewindeteil vorzugsweise einen radial abstehenden und ringförmig umlaufenden Kragen aufweist, wobei sich die Feder (z.B. Tellerfeder) einerseits an dem Kragen des Gewindeteils und andererseits am Boden des Gehäusetopfs abstützt.

Ferner ist zu erwähnen, dass die Feder im maximal gespannten Zustand vorzugsweise eine Spannkraft von mindestens 10kN, 20kN, 40kN, 60kN, 100kN oder 150kN auf das Gewindeteil und damit auf den Spannbolzen ausübt.

Zum Erleichtern des manuellen Aufschraubens der Kraftspannmutter auf den Spannbolzen vor dem eigentlichen Beginn des Spannvorgangs ist vorzugsweise eine Grifffläche vorgesehen, die auf der äußeren Mantelfläche des Gehäuseaußenteils und/oder des Gehäusetopfs angebracht ist, wobei die Grifffläche eine Rändelung aufweisen kann.

Ferner ist zu erwähnen, dass das Übersetzungsgetriebe zwischen der Stellschraube und dem drehbaren Gewindeteil vorzugsweise ein Übersetzungsverhältnis von mindestens 1:2, 1:3, 1:5, 1:10 aufweist, um mit einem relativ kleinen Anzugsmoments der Stellschraube einen relativ großen Wert der auf den Spannbolzen wirkenden Spannkraft zu erreichen.

Weiterhin ist noch zu erwähnen, dass zwischen dem drehbaren Gewindeteil und dem Gehäuseinnenteil ein Wälzlager angeordnet sein kann, welches das drehbare Gewindeteil in dem Gehäuseinnenteil lagert.

Darüber hinaus ist noch zu erwähnen, dass das Gewindeteil, der Gehäusetopf, die Feder, der Spannbolzen und das Gehäuseaußenteil vorzugsweise koaxial angeordnet sind.

Zu der Anzeigeeinrichtung ist noch zu erwähnen, dass die auf den Spannbolzen wirkende Spannkraft vorzugsweise optisch und/oder haptisch angezeigt wird.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Perspektivansicht einer erfindungsgemäßen Kraftspannmutter,

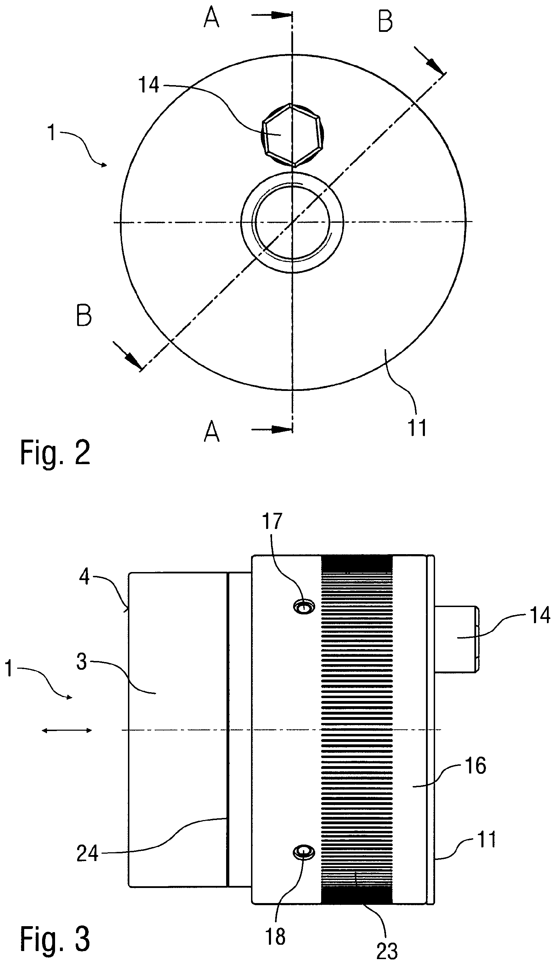

- Figur 2: eine Aufsicht auf die erfindungsgemäße Kraftspannmutter gemäß Figur 1,
- Figur 3: eine Seitenansicht auf die Kraftspannmutter aus den Figuren 1 und 2,

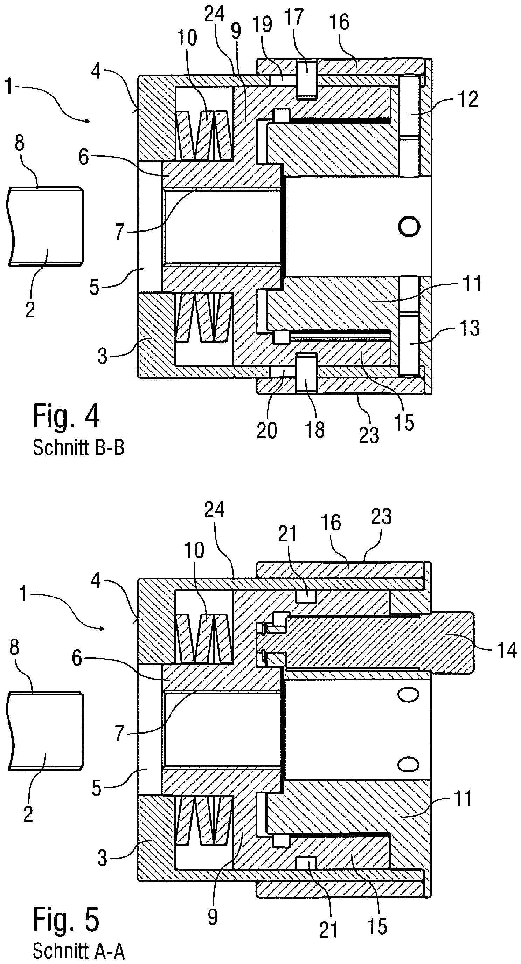

- Figur 4: eine Querschnittsansicht der Kraftspannmutter aus Figur 2 entlang der Schnittlinie B-B, sowie
- Figur 5: eine Schnittansicht der Kraftspannmutter gemäß Figur 2 entlang der Schnittlinie A-A.

Die Zeichnungen zeigen ein bevorzugtes Ausführungsbeispiel einer erfindungsgemäßen Kraftspannmutter 1, die in der Spanntechnik verwendet werden kann, um einen Spannbolzen 2 mit einer einstellbaren axialen Spannkraft zu spannen.

Die Kraftspannmutter 1 weist zunächst einen Gehäusetopf 3 mit einer stirnseitigen Anlagefläche 4 auf, die bei einem Spannvorgang an einer entsprechenden, nicht dargestellten Gegenlagerfläche anliegt.

Darüber hinaus weist der Gehäusetopf in seinem Boden mittig eine Bohrung 5 auf, in die der Spannbolzen 2 mit seinem freien Ende eingeführt werden kann.

In dem Gehäusetopf 3 befindet sich ein Gewindeteil 6 mit einem Innengewinde 7, das auf ein entsprechendes Außengewinde 8 des Spannbolzens 2 aufgeschraubt werden kann, wie noch detailliert beschrieben wird.

Das Gewindeteil 6 weist an seiner äußeren Mantelfläche einen ringförmig umlaufenden Kragen 9 auf, wobei zwischen dem Kragen 9 und dem Boden des Gehäusetopfs 3 eine Tellerfeder 10 angeordnet ist. Die Tellerfeder 10 stützt sich also einerseits am Boden des Gehäusetopfs 3 und andererseits an dem Kragen 9 des Gewindeteils 6 ab.

Weiterhin ist in den Gehäusetopf 3 ein Gehäuseinnenteil 11 eingesetzt, wobei das Gehäuseinnenteil 11 in dem Gehäusetopf 3 durch Bolzen 12, 13 fixiert ist. Hierzu weist der Gehäusetopf 3 in seiner Mantelfläche Radialbohrungen auf, wobei die Bolzen 12, 13 durch die Radialbohrungen in der Wandung des Gehäusetopfs 3 hindurch in entsprechende radial verlaufende Sackbohrungen in dem Gehäuseinnenteil 11 bündig eingeschlagen sind.

In das Gehäuseinnenteil 11 ist eine Stellschraube 14 eingesetzt, die dazu dient, das Gewindeteil 6 zu drehen und dadurch die Tellerfeder 10 und damit auch den Spannbolzen 2 mit einer einstellbaren Spannkraft zu spannen. Hierzu weist die Stellschraube 14 in ihrer Mantelfläche eine Längsverzahnung auf.

Weiterhin ist an das Gewindeteil 6 ein Hohlrad 15 angeformt, das ebenfalls eine innen liegende Längsverzahnung aufweist. Die Längsverzahnung der Stellschraube 14 greift also in die Längsverzahnung des Hohlrades 15 des Gewindeteils 6 ein, so dass eine Drehung der Stellschraube 14 zu einer entsprechenden Drehung des Hohlrades 15 und damit auch des Gewindeteils 6 führt.

Darüber hinaus weist die Kraftspannmutter ein Gehäuseaußenteil 16 auf, das über Bolzen 17, 18 mit dem Gewindeteil 6 verbunden ist, so dass die Axialstellung des Gehäuseaußenteils 16 die Axialstellung des Gewindeteils 6 und damit auch die auf den Spannbolzen 2 wirkende Spannkraft wiedergibt. Die Bolzen 17, 18 ragen durch jeweils einen axial verlaufenden Längsschlitz 19 bzw. 20 in der Wandung des Gehäusetopfs 3 in radialer Richtung nach innen in eine Ringnut 21 in der Mantelfläche des Hohlrads 15.

Diese Konstruktion ermöglicht eine Axialbewegung des Gehäuseaußenteils 16 zusammen mit dem Gewindeteil 6.

Gleichzeitig ermöglicht diese Konstruktion eine Drehbewegung des Gewindeteils 6 relativ zu dem Gehäuseaußenteil 16, da sich die Bolzen 17, 18 in der Ringnut 21 frei bewegen können.

Schließlich verhindert diese Konstruktion eine Drehbewegung des Gehäuseaußenteils 16, da die Längsschlitze 19, 20 eine Drehbewegung der Bolzen 17, 18 und damit des Gehäuseaußenteils 16 verhindern.

An der Mantelfläche des Gehäuseaußenteils 16 befindet sich eine umlaufende Rändelung 23, die es ermöglicht, die Kraftspannmutter 1 zunächst manuell aufzuschrauben.

Im Folgenden wir nun ein Spannvorgang der Kraftspannmutter 1 beschrieben.

Hierzu wird die Kraftspannmutter 1 zunächst manuell auf den Spannbolzen 2 aufgeschraubt, bis die Anlagefläche 4 an der Stirnseite des Gehäusetopfs 3 an einer entsprechenden, nicht dargestellten Gegenlagerfläche anliegt. Dieses manuelle Aufschrauben der Kraftspannmutter 1 wird durch die Rändelung 23 auf der Mantelfläche des Gehäuseaußenteils 16 erleichtert.

Anschließend wird dann die Stellschraube 14 mit einem herkömmlichen Schraubenschlüssel angezogen. Bei diesem Spannvorgang schieben sich der Gehäusetopf 3 und das Gehäuseaußenteil 16 axial ineinander. Der Spannvorgang wird dann durch ein Drehen der Stellschraube 14 so lange fortgesetzt, bis das Gehäuseaußenteil 16 eine Markierung 24 auf der Mantelfläche des Gehäusetopfs 3 erreicht. Dann ist nämlich die vorgegebene Nennspannkraft erreicht. Beim Anziehen der Stellschraube 14 ist also kein Drehmomentschlüssel erforderlich, da der Benutzer das Erreichen der Nennspannkraft einfach erkennen kann, wenn die Kante des Gehäuseaußenteils 16 die Markierung 24 erreicht.

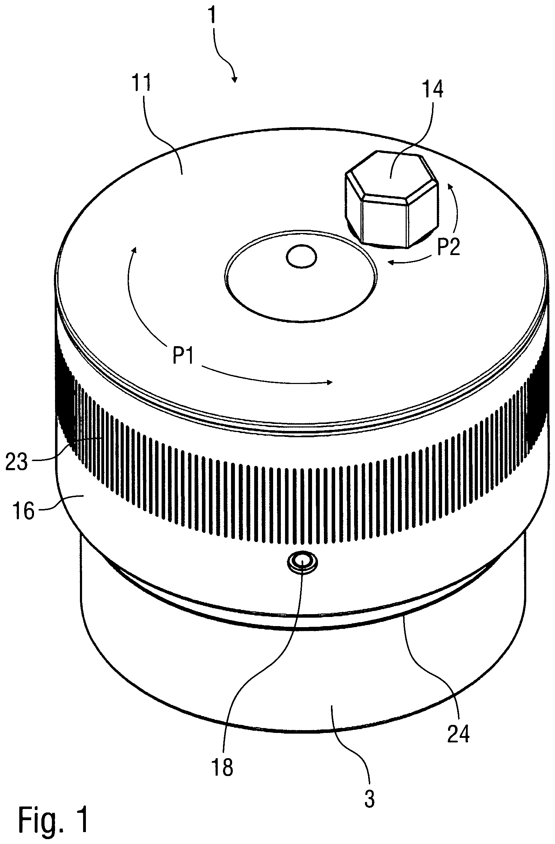

Bei einem Spannvorgang erfolgen also nacheinander zwei Drehbewegungen, nämlich zum einen eine manuelle Drehbewegung der kompletten Kraftspannmutter 1 entlang der Drehrichtung P1 (vgl. Fig. 1) und eine anschließende Drehbewegung der Stellschraube 14 entlang der Drehrichtung P2 (vgl. Fig. 1).

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 1: Kraftspannmutter
- 2: Spannbolzen
- 3: Gehäusetopf
- 4: Anlagefläche der Kraftspannmutter
- 5: Bohrung im Gehäusetopf
- 6: Gewindeteil
- 7: Innengewinde des Gewindeteils
- 8: Außengewinde des Spannbolzens
- 9: Kragen am Gewindeteil
- 10: Tellerfeder
- 11: Gehäuseinnenteil
- 12: Bolzen zur Verbindung von Gehäusetopf und Gehäuseinnenteil
- 13: Bolzen zur Verbindung von Gehäusetopf und Gehäuseinnenteil
- 14: Stellschraube
- 15: Hohlrad des Gewindeteils
- 16: Gehäuseaußenteil
- 17: Bolzen zur axialen Verbindung von Gehäuseaußenteil und Gewindeteil
- 18: Bolzen zur axialen Verbindung von Gehäuseaußenteil und Gewindeteil
- 19: Längsschlitz in der Wandung des Gehäusetopfs
- 20: Längsschlitz in der Wandung des Gehäusetopfs
- 21: Ringnut in dem Gewindeteil
- 23: Rändelung am Gehäuseaußenteil
- 24: Markierung
- P1: Drehrichtung der Kraftspannmutter beim manuellen Aufschrauben bzw. Abschrauben
- P2: Drehrichtung der Stellschraube beim Spannen bzw. Lösen

## Patentansprüche

1. Kraftspannmutter (1) zum axialen Spannen eines Spannbolzens (2) mit einer einstellbaren Spannkraft, mit
a) einer Stelleinrichtung (6, 10, 14, 15) zum Einstellen der auf den Spannbolzen (2) wirkenden Spannkraft,
b) einem Gehäusetopf (3) mit einer stirnseitigen Anlagefläche (4) zur Anlage an einer Gegenlagerfläche und mit einer stirnseitigen Bohrung (5) zum Einführen des Spannbolzens (2) in den Gehäusetopf (3), und
c) einem Gewindeteil (6) zum Aufschrauben auf den Spannbolzen (2), wobei das Gewindeteil (6) in dem Gehäusetopf (3) angeordnet und in dem Gehäusetopf (3) drehbar und axial beweglich ist, und
d) einer Feder (10), die das Gewindeteil (6) gegenüber dem Gehäusetopf (3) axial vorspannt, so dass die Axialstellung des Gewindeteils (6) die auf den Spannbolzen (2) wirkende Spannkraft bestimmt,
**gekennzeichnet durch**
e) eine Anzeigeeinrichtung (16, 24) zur Anzeige der auf den Spannbolzen (2) wirkenden Spannkraft.

2. Kraftspannmutter (1) nach Anspruch 1,
**dadurch gekennzeichnet,**
a) **dass** die Anzeigeeinrichtung (16, 24) ein von außen sichtbares Gehäuseaußenteil (16) aufweist,
b) **dass** das Gehäuseaußenteil (16) relativ zu dem Gehäusetopf (3) axial verschiebbar ist, und
c) **dass** das Gehäuseaußenteil (16) mit dem Gewindeteil (6) verbunden ist, so dass die Axialstellung des Gehäuseaußenteils (16) die Axialstellung des Gewindeteils (6) und damit die auf den Spannbolzen (2) wirkende Spannkraft wiedergibt.

3. Kraftspannmutter (1) nach Anspruch 2, **dadurch gekennzeichnet, dass** die Anzeigeeinrichtung (16, 24) eine Skale (24) aufweist, die an der Mantelfläche des Gehäusetopfs (3) angebracht ist und ein Ablesen der Axialstellung des Gehäuseaußenteils (16) ermöglicht.

4. Kraftspannmutter (1) nach einem der vorhergehenden Ansprüche, **dadurch gekennzeichnet, dass** die Stelleinrichtung (6, 10, 14, 15) eine von außen zugängliche drehbare Stellschraube (14) aufweist sowie ein Übersetzungsgetriebe (14, 15) zur Übertragung einer Drehbewegung der Stellschraube (14) auf eine Drehbewegung des Gewindeteils (6).

5. Kraftspannmutter (1) nach Anspruch 4,
**dadurch gekennzeichnet,**
a) **dass** das drehbare Gewindeteil (6) ein Hohlrad (15) mit einer innen liegenden Längsverzahnung aufweist,
b) **dass** die Stellschraube (14) innerhalb des Hohlrades (15) exzentrisch angeordnet ist und eine außen liegende Längsverzahnung aufweist, und
c) **dass** die Längsverzahnung der Stellschraube (14) in die Längsverzahnung des Hohlrads (15) eingreift.

6. Kraftspannmutter (1) nach Anspruch 5,
**dadurch gekennzeichnet,**
a) **dass** das Gewindeteil (6) einen bestimmten axialen Maximalhub aufweist,
b) die Längsverzahnung der Stellschraube (14) und die Längsverzahnung des Hohlrads (15) einen Verzahnungseingriff mit einer bestimmten Axiallänge aufweisen, und
c) **dass** die Axiallänge des Verzahnungseingriffs größer ist als der Maximalhub des Gewindeteils (6), so dass der Verzahnungseingriff zwischen der Stellschraube (14) und dem Hohlrad (15) in jeder Axialstellung des Gewindeteils (6) bestehen bleibt.

7. Kraftspannmutter (1) nach einem der Ansprüche 2 bis 6,
**dadurch gekennzeichnet,**
a) **dass** der Gehäusetopf (3) in seiner Mantelfläche einen Durchbruch (19, 20) aufweist,
b) **dass** sich durch den Durchbruch (19, 20) hindurch ein Verbindungselement (17, 18) erstreckt, welches das Gehäuseaußenteil (16) mit dem Gewindeteil (6) verbindet, und
c) **dass** der Durchbruch (19, 20) in der Mantelfläche des Gehäusetopfs (3) eine axiale Erstreckung aufweist, die einen entsprechenden Axialhub des Gehäuseaußenteils (16) ermöglicht.

8. Kraftspannmutter (1) nach Anspruch 7,
**dadurch gekennzeichnet,**
a) **dass** das Gewindeteil (6) in seiner äußeren Mantelfläche eine Ringnut (21) aufweist,
b) **dass** der Durchbruch (19, 20) in der Mantelfläche des Gehäusetopfs (3) ein axial verlaufender Längsschlitz (19, 20) ist,
c) **dass** das Verbindungselement (17, 18) fest an der Innenseite des Gehäuseaußenteils (16) angebracht ist und durch den Längsschlitz (19, 20) in der Mantelfläche des Gehäusetopfs (3) hindurch in die Ringnut (21) in dem Gewindeteil (6) hineinragt, so dass
c1) eine Drehbewegung des Gehäuseaußenteils (16) relativ zu dem Gehäusetopf (3) verhindert wird, und
c2) eine Axialbewegung des Gehäuseaußenteils (16) relativ zu dem Gehäusetopf (3) möglich ist, und
c3) eine Drehbewegung des Gewindeteils (6) relativ zu dem Gehäuseaußenteil (16) möglich ist, und/oder
d) **dass** das Verbindungselement (17, 18) mindestens einen Bolzen (17, 18) aufweist, der von außen in eine Bohrung in der Mantelfläche des Gehäuseaußenteils (16) bündig eingeschlagen ist und radial nach innen in die Ringnut (21) in dem Gewindeteil (6) hineinragt.

9. Kraftspannmutter (1) nach einem der vorhergehenden Ansprüche, **dadurch gekennzeichnet,**
a) **dass** die Stellschraube (14) in einem Gehäuseinnenteil (11) drehbar gelagert ist, und
b) **dass** die Stellschraube (14) an ihrem freien Ende einen Sicherungsring aufweist, um die Stellschraube (14) axial zu sichern, und
c) **dass** das Gehäuseinnenteil (11) in den Gehäusetopf (3) eingesetzt und fest mit dem Gehäusetopf (3) verbunden ist, insbesondere durch mindestens einen Bolzen (12, 13), der von außen in eine Bohrung in der Wandung des Gehäusetopfs (3) bündig eingeschlagen ist und radial nach innen in das Gehäuseinnenteil (11) hineinragt.

10. Kraftspannmutter (1) nach einem der vorhergehenden Ansprüche, **dadurch gekennzeichnet,**
a) **dass** die Feder (10) zum Vorspannen des Gewindeteils (6) relativ zu dem Gehäusetopf (3) mindestens eine Tellerfeder (10) aufweist, und/oder
b) **dass** das drehbare Gewindeteil (6) einen radial abstehenden und ringförmig umlaufenden Kragen (9) aufweist, wobei sich die Feder (10) einerseits an dem Kragen (9) des Gewindeteils (6) und andererseits am Boden des Gehäusetopfs (3) abstützt, und/oder
c) **dass** die Feder (10) im maximal gespannten Zustand eine Spannkraft von mindestens 10kN, 20kN, 40kN, 60kN, 100kN oder 150kN auf das Gewindeteil (6) und damit auf den Spannbolzen (2) ausübt.

11. Kraftspannmutter (1) nach einem der vorhergehenden Ansprüche, **dadurch gekennzeichnet,**
a) **dass** das Gehäuseaußenteil (16) und/oder der Gehäusetopf (3) in ihrer äußeren Mantelfläche eine als Grifffläche dienende Rändelung (23) aufweisen, und/oder
b) **dass** das Übersetzungsgetriebe ein Übersetzungsverhältnis von mindestens 1:2, 1:3, 1:5, 1:10 aufweist, um mit einem relativ kleinen Anzugsmoment der Stellschraube (14) einen relativ großen Wert der auf den Spannbolzen (2) wirkenden Spannkraft zu erreichen, und/oder
c) **dass** das Gewindeteil (6), der Gehäusetopf (3), die Feder (10), der Spannbolzen (2) und das Gehäuseaußenteil (16) koaxial angeordnet sind, und/oder
d) **dass** die Anzeigeeinrichtung (16, 24) die auf den Spannbolzen (2) wirkende Spannkraft optisch und/oder haptisch anzeigt.

## Claims

1. Power-operated tightening nut (1) for axially tightening a fastening bolt (2) with an adjustable tightening force, having
a) an adjusting device (6, 10, 14, 15) for adjusting the tightening force acting on the fastening bolt (2),
b) a housing pot (3) having a contact surface (4) on the front side for resting against a counter-bearing surface and having a hole (5) on the front side for insertion of the fastening bolt (2) into the housing pot (3), and
c) a threaded portion (6) for screwing onto the fastening bolt (2), wherein the threaded portion (6) is arranged in the housing pot (3) and is rotatable and axially movable in said housing pot (3), and
d) a spring (10) which axially pretightens the threaded portion (6) relative to the housing pot (3) such that the axial position of the threaded portion (6) determines the tightening force acting on the fastening bolt (2),
**characterised by**
e) a display (16, 24) for displaying the tightening force acting on the fastening bolt (2).

2. Power-operated tightening nut (1) according to claim 1, **characterised in that**
a) the display (16, 24) has a housing outer part (16) visible from outside,
b) the housing outer part (16) is axially movable relative to the housing pot (3), and
c) the housing outer part (16) is joined to the threaded portion (6) such that the axial position of the housing outer part (16) reflects the axial position of the threaded portion (6) and therefore the tightening force acting on the fastening bolt (2).

3. Power-operated tightening nut (1) according to claim 2, **characterised in that** the display (16, 24) has a scale (24) which is mounted on the lateral surface of the housing pot (3) and enables the axial position of the housing outer part (16) to be read off.

4. Power-operated tightening nut (1) according to one of the preceding claims, **characterised in that** the adjusting device (6, 10, 14, 15) comprises a rotatable adjusting screw (14) accessible from the outside in addition to a transmission gear (14, 15) for translating a rotary movement of the adjusting screw (14) into a rotary movement of the threaded portion (6).

5. Power-operated tightening nut (1) according to claim 4, **characterised in that**
a) the rotatable threaded portion (6) has a ring gear (15) with internally located longitudinal teeth,
b) the adjusting screw (14) is arranged eccentrically inside the ring gear (15) and has externally located longitudinal teeth, and
c) the longitudinal teeth of the adjusting screw (14) engage in the longitudinal teeth of the ring gear (15).

6. Power-operated tightening nut (1) according to claim 5, **characterised in that**
a) the threaded portion (6) has a specific axial maximum travel,
b) the longitudinal teeth of the adjusting screw (14) and the longitudinal teeth of the ring gear (15) have a tooth engagement with a specific axial length, and
c) the axial length of the tooth engagement is greater than the maximum travel of the threaded portion (6) so that the tooth engagement between the adjusting screw (14) and the ring gear (15) persists in every axial position of the threaded portion (6).

7. Power-operated tightening nut (1) according to one of claims 2 to 6, **characterised in that**
a) the housing pot (3) has an aperture (19, 20) in its lateral surface,
b) that a connecting element (17, 18), which connects the housing outer part (16) to the threaded portion (6), extends through the aperture (19, 20), and
c) the aperture (19, 20) in the lateral surface of the housing pot (3) has an axial extension which enables corresponding axial travel of the housing outer part (16).

8. Power-operated tightening nut (1) according to claim 7, **characterised in that**
a) the threaded portion (6) has an annular groove (21) in its outer lateral surface,
b) the aperture (19, 20) in the lateral surface of the housing pot (3) is an elongated slot (19, 20) running axially,
c) the connecting element (17, 18) is firmly attached on the inside of the housing outer part (16) and protrudes through the elongated slot (19, 20) in the lateral surface of the housing pot (3) into the annular groove (21) in the threaded portion (6) such that
c1) a rotary movement of the housing outer part (16) relative to the housing pot (3) is prevented, and
c2) an axial movement of the housing outer part (16) relative to the housing pot (3) is possible, and
c3) a rotary movement of the threaded portion (6) relative to the housing outer part (16) is possible, and/or
d) the connecting element (17, 18) has at least one bolt (17, 18) which is driven flush into a hole in the lateral surface of the housing outer part (16) from the outside and protrudes radially inwards into the annular groove (21) in the threaded portion (6).

9. Power-operated tightening nut (1) according to one of the preceding claims, **characterised in that**
a) the adjusting screw (14) is rotatably supported in a housing inner part (11), and
b) the adjusting screw (14) has a circlip on its free end to secure the adjusting screw (14) axially, and
c) the housing inner part (11) is inserted into the housing pot (3) and firmly connected to said housing pot (3), in particular by at least one bolt (12, 13), which is driven flush into a hole in the wall of the housing pot (3) from the outside and protrudes radially inwards into the housing inner part (11).

10. Power-operated tightening nut (1) according to one of the preceding claims, **characterised in that**
a) the spring (10) for pretightening the threaded portion (6) relative to the housing pot (3) has at least one disc spring (10), and/or
b) the rotatable threaded portion (6) has a radially projecting and annularly encircling collar (9), wherein the spring (10) is supported, on the one hand, on the collar (9) of the threaded portion (6) and, on the other hand, on the base of the housing pot (3), and/or
c) the spring (10) in the maximally tensioned state exerts a tightening force of at least 10 kN, 20 kN, 40 kN, 60 kN, 100 kN or 150 kN on the threaded portion (6) and therefore on the fastening bolt (2).

11. Power-operated tightening nut (1) according to one of the preceding claims, **characterised in that**
a) the housing outer part (16) and/or the housing pot (3) has/have knurling (23) in its/their outer lateral surface serving as a gripping surface, and/or
b) the transmission gear has a transmission ratio of at least 1:2, 1:3, 1:5, 1:10 in order to achieve a relatively large value of the tightening force acting on the fastening bolt (2) with a relatively small torque of the adjusting screw (14), and/or
c) the threaded portion (6), the housing pot (3), the spring (10), the fastening bolt (2) and the housing outer part (16) are arranged coaxially, and/or
d) the display (16, 24) displays the tightening force acting on the fastening bolt (2) visually and/or haptically.

## Revendications

1. Ecrou de serrage (1) pour le serrage axial d'un boulon de serrage (2) avec une force de serrage réglable, avec
a) un dispositif de réglage (6, 10, 14, 15) pour le réglage de la force de serrage agissant sur le boulon de serrage (2),
b) une cuve de boîtier (3) avec une surface d'appui côté avant (4) pour l'appui contre une surface de palier antagoniste et avec un perçage côté avant (5) pour l'introduction du boulon de serrage (2) dans la cuve de boîtier (3), et
c) une partie filetée (6) pour le vissage sur le boulon de serrage (2), dans lequel la partie filetée (6) est agencée dans la cuve de boîtier (3) et est mobile' axialement et en rotation dans la cuve de boîtier (3), et
d) un ressort (10) qui précontraint axialement la partie filetée (6) par rapport à la cuve de boîtier (3) de sorte que la position axiale de la partie filetée (6) détermine la force de serrage agissant sur le boulon de serrage (2),
**caractérisé par**
e) un dispositif d'affichage (16, 24) pour l'affichage de la force de serrage agissant sur le boulon de serrage (2).

2. Ecrou de serrage (1) selon la revendication 1,
**caractérisé en ce que**
a) le dispositif d'affichage (16, 24) présente une partie extérieure de boîtier (16) visible de l'extérieur,
b) la partie extérieure de boîtier (16) est coulissante axialement par rapport à la cuve de boîtier (3), et
c) la partie extérieure de boîtier (16) est reliée à la partie filetée (6) de sorte que la position axiale de la partie extérieure de boîtier (16) reproduise la position axiale de la partie filetée (6) et ainsi la force de serrage agissant sur le boulon de serrage (2).

3. Ecrou de serrage (1) selon la revendication 2,
**caractérisé en ce que** le dispositif d'affichage (16, 24) présente une échelle (24) qui est montée sur la surface enveloppe de la cuve de boîtier (3) et permet une lecture de la position axiale de la partie extérieure de boîtier (16).

4. Ecrou de serrage (1) selon l'une quelconque des revendications précédentes, **caractérisé en ce que** le dispositif de réglage (6, 10, 14, 15) présente une vis de réglage (14) rotative accessible de l'extérieur ainsi qu'un engrenage de transmission (14, 15) pour la transmission d'un mouvement rotatif de la vis de réglage (14) à un mouvement rotatif de la partie filetée (6).

5. Ecrou de serrage (1) selon la revendication 4,
**caractérisé en ce que**
a) la partie filetée (6) rotative présente une roue creuse (15) avec une denture longitudinale intérieure,
b) la vis de réglage (14) est agencée dans la roue creuse (15) de manière excentrée et présente une denture longitudinale extérieure, et
c) la denture longitudinale de la vis de réglage (14) vient en prise avec la denture longitudinale de la roue creuse (15).

6. Ecrou de serrage (1) selon la revendication 5,
**caractérisé en ce que**
a) la partie filetée (6) présente une course maximale axiale déterminée,
b) la denture longitudinale de la vis de réglage (14) et la denture longitudinale de la roue creuse (15) présentent une mise en prise de denture avec une longueur axiale déterminée, et
c) la longueur axiale de la mise en prise de denture est plus grande que la course maximale de la partie filetée (6) de sorte que la mise en prise de denture reste entre la vis de réglage (14) et la roue creuse (15) dans chaque position axiale de la partie filetée (6).

7. Ecrou de serrage (1) selon l'une quelconque des revendications 2 à 6,
**caractérisé en ce que**
a) la cuve de boîtier (3) présente une ouverture (19, 20) dans sa surface enveloppe,
b) un élément de liaison (17, 18) s'étend au travers de l'ouverture (19, 20), lequel relie la partie extérieure de boîtier (16) à la partie filetée (6), et
c) l'ouverture (19, 20) présente, dans la surface enveloppe de la cuve de boîtier (3), une étendue axiale qui permet une course axiale correspondante de la partie extérieure de boîtier (16).

8. Ecrou de serrage (1) selon la revendication 7,
**caractérisé en ce que**
a) la partie filetée (6) présente une rainure annulaire (21) dans sa surface enveloppe extérieure,
b) l'ouverture (19, 20) est, dans la surface enveloppe de la cuve de boîtier (3), une fente longitudinale (19, 20) s'étendant axialement,
c) l'élément de liaison (17, 18) est monté fixement sur le côté intérieur de la partie extérieure de boîtier (16) et pénètre par la fente longitudinale (19, 20) dans la surface enveloppe de la cuve de boîtier (3) dans la rainure annulaire (21) dans la partie filetée (6) de sorte que
c1) un mouvement rotatif de la partie extérieure de boîtier (16) par rapport à la cuve de boîtier (3) soit empêché, et
c2) un mouvement axial de la partie extérieure de boîtier (16) par rapport à la cuve de boîtier (3) soit possible, et
c3) un mouvement rotatif de la partie filetée (6) par rapport à la partie extérieure de boîtier (16) soit possible, et/ou
d) l'élément de liaison (17, 18) présente au moins un boulon (17, 18) qui est enfoncé à fleur depuis l'extérieur dans un perçage dans la surface enveloppe de la partie extérieure de boîtier (16) et pénètre radialement vers l'intérieur dans la rainure annulaire (21) dans la partie filetée (6).

9. Ecrou de serrage (1) selon l'une quelconque des revendications précédentes, **caractérisé en ce que**
a) la vis de réglage (14) est logée de manière rotative dans une partie intérieure de boîtier (11), et
b) la vis de réglage (14) présente, sur son extrémité libre, un anneau de fixation afin de bloquer la vis de réglage (14) axialement, et
c) la partie intérieure de boîtier (11) est insérée dans la cuve de boîtier (3) et reliée fixement à la cuve de boîtier (3), en particulier par au moins un boulon (12, 13) qui est enfoncé à fleur depuis l'extérieur dans un perçage dans la paroi de la cuve de boîtier (3) et pénètre radialement vers l'intérieur dans la partie intérieure de boîtier (11).

10. Ecrou de serrage (1) selon l'une quelconque des revendications précédentes, **caractérisé en ce que**
a) le ressort (10) présente, pour la précontrainte de la partie filetée (6) par rapport à la cuve de boîtier (3), au moins une rondelle-ressort (10), et/ou
b) la partie filetée (6) rotative présente un collet (9) tournant de manière annulaire et dépassant radialement, dans lequel le ressort (10) s'appuie d'une part contre le collet (9) de la partie filetée (6) et d'autre part contre le fond de la cuve de boîtier (3), et/ou
c) le ressort (10) exerce, dans l'état serré au maximum, une force de serrage d'au moins 10 kN, 20 kN, 40 kN, 60 kN, 100 kN ou 150 kN sur la partie filetée (6) et ainsi sur le boulon de serrage (2).

11. Ecrou de serrage (1) selon l'une quelconque des revendications précédentes, **caractérisé en ce que**
a) la partie extérieure de boîtier (16) et/ou la cuve de boîtier (3) présentent, dans leur surface enveloppe extérieure, un moletage (23) servant de surface de préhension, et/ou
b) l'engrenage de transmission présente un rapport de transmission d'au moins 1:2, 1:3, 1:5, 1:10 afin d'atteindre, avec un couple de serrage relativement petit de la vis de réglage (14), une valeur relativement grande de la force de serrage agissant sur le boulon de serrage (2), et/ou
c) la partie filetée (6), la cuve de boîtier (3), le ressort (10), le boulon de serrage (2) et la partie extérieure de boîtier (16) sont agencés coaxialement, et/ou
d) le dispositif d'affichage (16, 24) affiche la force de serrage agissant sur le boulon de serrage (2) par voie optique et/ou haptique.
